# DEMANDE DE BREVET EUROPEEN

(11) **EP 1 798 972 A1**
(43) Date de publication de la demande: **20.06.2007**
(21) Numéro de dépôt: 05301069.0
(22) Date de dépôt: 16.12.2005
(51) Int. Cl.: H04N 7/16, H04N 7/173, H04N 7/58

(54) **Système d'emission interactive, permettant notamment la commande du contenu des emissions par les usagers**

(71) Demandeur: Alcatel Lucent, 75008 Paris (FR)
(72) Inventeur: Bacciega, Davide, 91600 Savigny sur Orge (FR); Gonguet, Arnaud, 75013 Paris (FR)
(74) Mandataire: Korakis-Ménager, Sophie

(57) **Abrégé**

La présente invention concerne un système d'émission interactive

Le système comporte une plate-forme (2) délivrant des services multimédias IMS. Cette plate-forme comporte un service de diffusion (3) de flux de données (4) vers les terminaux de réception (1) des usagers en fonction de requêtes de sélection (6) émises par les usagers, les flux de données sélectionnées composant le programme.

L'invention s'applique notamment pour permettre aux usagers de définir eux-même le contenu des émissions qu'ils sont en train de regarder.

## Description

La présente invention concerne un système d'émission interactive. Elle s'applique notamment pour permettre aux usagers de définir eux-même le contenu des émissions qu'ils sont en train de regarder. L'invention permet par ailleurs une taxation du contenu reçu.

Des émissions de télévision interactives existent déjà. L'interactivité dans le champ télévisuel ouvre des perspectives les plus diverses possibles. Toutes ne sont pas encore imaginées ou utilisées. Il est clair que l'intérêt déjà grand des utilisateurs pour la télévision interactive peut encore augmenter avec une plus forte personnalisation des services interactifs. Actuellement, la plupart des services de télévision interactifs ne permettent qu'un faible degré d'interaction avec le contenu des émissions. Les interactions sont généralement prédéfinies et programmées dans des logiciels interactifs liés aux programmes de télévision.
Permettre à un utilisateur de créer, notamment de mettre en scène sa propre émission de télévision, constitue un progrès important en ce qui concerne l'interactivité On peut prendre comme exemple le cas de la retransmission télévisée de la compétition cycliste « Le Tour de France ». Actuellement les sujets, les plans et les cadrages sont imposés par le réalisateur de l'émission. Une retransmission interactive pourrait permettre au téléspectateur de voir à sa demande, le coureur échappé, la tête du peloton lancé à sa poursuite, la queue de peloton ou un plan d'ensemble vu d'hélicoptère par exemple. A ces vues, pourraient s'ajouter par exemple des données demandées par l'usager, telle que l'évolution des écarts de temps, des données bibliographiques sur tel ou tel coureur. Les usagers qui ne s'intéressent pas à la course auraient par exemple la possibilité de ne voir que les paysages traversés par les coureurs avec la possibilité d'afficher des informations touristiques. Enfin, l'usager pourrait de temps à autre lorsque la compétition devient monotone à son goût demander à passer d'autres sujets tels que des reportages sur les coureurs ou l'actualité du Tour, ou encore des reportages sur les paysages traversés. On imagine la multitude de possibilités qui pourrait être offerte aux usagers.
Fournir de telles possibilités d'interaction exige néanmoins une infrastructure coûteuse. Il faut notamment prévoir un grand nombre de prises de vues et de prises de son. Il faut un ensemble de matériels important en ce qui concerne les caméras et les autres moyens techniques associés. Il faut éventuellement prévoir plus de personnes pour faire fonctionner tout ce matériel.
Les solutions de télévision interactive connues ne permettent pas à un usager d'exercer un réel contrôle sur le contenu des émissions de télévision qu'il regarde, à part quelques interactions limitées au niveau du menu de base et de quelques prises de vues. Des logiciels de mise en scène sont disponibles pour permettre à un utilisateur de construire son propre film, mais pas pour modifier des programmes de télévision, notamment diffusés en direct.

Un but de l'invention est notamment de permettre à des usagers de diriger leurs propres émissions de télévision de façon économique pour les fournisseurs de programmes et autres opérateurs. A cet effet, l'invention a pour objet un système d'émission d'un programme interactif comportant une plate-forme délivrant des services multimédias IMS. Cette plate-forme comporte un service de diffusion de flux de données vers les terminaux de réception des usagers en fonction de requêtes de sélection émises par les usagers, les flux de données sélectionnées composant le programme.

Dans un exemple de mise en oeuvre, la plate-forme comporte au moins :
- un service de diffusion transmettant les flux de données aux terminaux de réception ;
- un service de réalisation recevant les requêtes et modifiant la sélection des flux de données à transmettre par le service de diffusion en fonction des descriptions de flux transmises par les requêtes ;
- un service de contenu délivrant l'ensemble des flux de données disponibles pour le programme ;
- un service de sélection filtrant les flux de données délivrées par le service de contenu en fonction des instructions fournies par le service de réalisation.

La plate-forme peut comporter les profils utilisateurs des usagers, chaque profil utilisateur comportant un module de préférence comportant des descriptions de flux de données propres à l'usager. Le service de réalisation sélectionne par exemple pour chaque profil utilisateur, les flux à transmettre en fonction des requêtes et des descriptions contenues dans le module de préférence.

Avantageusement, la plate-forme comporte un service de taxation, ce service de taxation étant activé pour chaque flux de données sélectionné, l'activation du service de taxation générant un élément de facturation.
Le service de taxation peut être activé pour chaque profil utilisateur générant le flux sélectionné. Il peut être activé par le service de réalisation.

Les flux de données disponibles dans le service de contenu sont par exemple :
- des canaux vidéo correspondant chacun à une prise de vue ;
- des canaux vidéo correspondant chacun à une prise de son;
- des données interactives liées au programme.

L'invention a pour principaux avantages qu'elle s'applique à de nombreux types de terminaux de réceptions de programmes TV, qu'elle s'applique pour tous types de programmes interactifs et qu'elle permet une grande souplesse d'utilisation.

D'autres caractéristiques et avantages de l'invention apparaîtront à l'aide de la description qui suit faite en regard des dessins annexés qui représentent :
- la figure 1, un exemple de réalisation d'un système d'émission interactive selon l'invention ;
- la figure 2, un exemple de programme interactif fourni par un système selon l'invention.

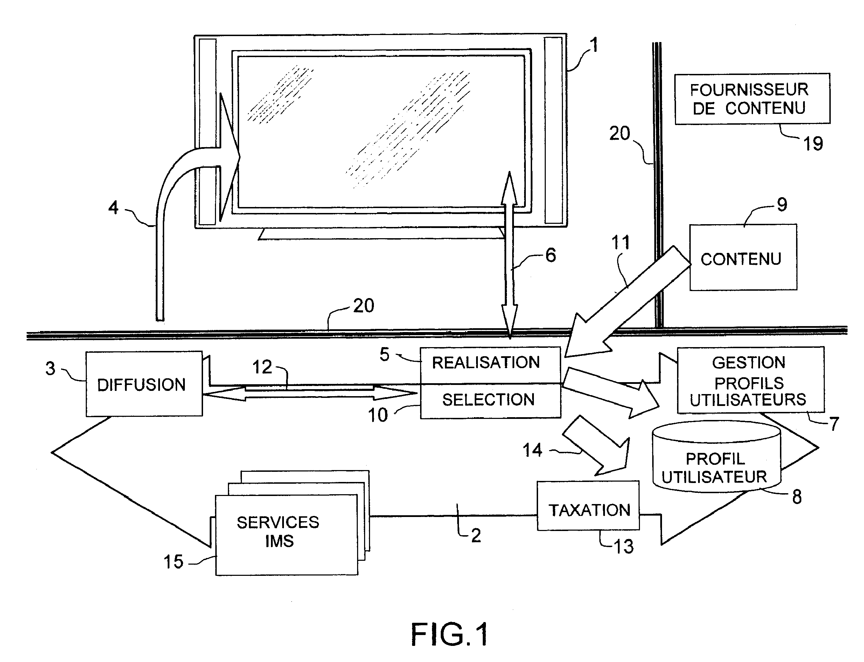

La figure 1 présente un exemple de réalisation d'un système d'émission interactive selon l'invention. Un programme de télévision interactif est visualisé sur l'écran d'un terminal de réception 1. Dans l'exemple de la figure 1, ce terminal est un téléviseur équipé de logiciels ou de décodeurs lui permettant d'interagir avec une plate-forme de diffusion de programme. D'autres terminaux de réception peuvent être utilisés, on peut par exemple utiliser des téléphones mobiles équipés d'écrans ou des ordinateurs portables. Le programme reçu par le terminal 1 est transmis par un système selon l'invention.
Ce système comporte une plate-forme 2. Cette plate-forme est une plate-forme délivrant des services IMS, IMS étant l'acronyme de l'expression anglo-saxonne « Internet protocole Multimedia Subsystem ». Une plate-forme IMS est définie selon une architecture réseau standardisée, elle est notamment utilisée par des opérateurs de téléphonie mobile qui veulent fournir via cette plate-forme des services de téléphonie mobile et des services multimédias notamment via l'Internet. Elle fonctionne avec le protocole de communication Internet IP. Une plate-forme IMS peut fournir tous les services que l'Internet fournit. IMS combine le monde de l'Internet avec celui de la téléphonie mobile. Etant donné que l'invention utilise une plate-forme IMS, les communications de l'usager avec la plate-forme peuvent se faire via le réseau de téléphonie mobile ou le réseau Internet. Les échanges de données entre les services décrits ci-après utilisent un bus 20 fonctionnant sous le protocole Internet IP. L'invention utilise les fonctions offertes par les systèmes IMS. Un article « IP Multimedia Subsystem (IMS) and Its Comparison with Different Systems » - Seminar in High Performance Network Architecture (HPNA) - Institute of Communication Network and Computer Engineering (IKR) - University of Stuttgart Germany 2005, présente le fonctionnement d'un système IMS.
La plate-forme comporte un service de diffusion 3. Ce service de diffusion transmet vers le terminal de réception 1 des flux de données 4. Un flux de données peut notamment être un ensemble de signaux vidéo pour transmettre une image, un ensemble de signaux audio pour transmettre un ensemble de prises de son ou un ensemble de données interactives qui s'affichent généralement sur l'écran du terminal 1. Tous ces flux sont transmis en parallèle par multiplexage. Leur diffusion peut être du type analogique ou numérique, elle emprunte par exemple la voie hertzienne ou passe par un réseau câblé. L'invention permet aux usagers de modifier chacun de ces flux, indépendamment les uns des autres, tout au long de la diffusion d'un programme interactif. Les modifications se font sur la base d'une description des différents flux disponibles pour un programme donné. Elles permettent à l'usager de réaliser lui-même son programme en fonction des flux de données disponibles. Un exemple d'architecture permettant une telle réalisation est décrit par la suite.

Le service de diffusion 3 transmet donc des flux sélectionnés par l'usager. Parmi les flux transmis il y a un canal vidéo, un canal audio et par exemple d'autres canaux véhiculant des données interactives. Au cours de la diffusion du programme, l'usager peut modifier sa sélection, c'est-à-dire par exemple sélectionner un autre canal vidéo pour obtenir un autre plan. Il peut de même modifier le canal audio ou les autres canaux de données interactives. Il peut par exemple décider d'afficher des informations concernant le programme. Typiquement, si l'on considère une retransmission du « Tour de France », l'usager peut demander l'affichage d'information sur un coureur cycliste particulier ou sur le paysage traversé par le peloton cycliste. Le service de diffusion 3 transmet donc les flux de données sélectionnés, vidéo, audio ou autres, constituant le programme interactif. Il ne gère pas la sélection, c'est-à-dire la constitution « à la carte » du programme.
La plate-forme comporte un service de réalisation 5 qui gère les requêtes ou les commandes 6 émises par les usagers. Ces requêtes et commandes empruntent par exemple le même canal de diffusion que les flux de données 4 décrites précédemment. Les requêtes 6 peuvent aussi être transmises à la plate-forme via un réseau de téléphonie mobile.
Plus particulièrement, dans l'exemple de la figure 1, le service de réalisation 5 prend en compte les requêtes de construction de flux de données émises par le terminal 1, demandées par l'usager. Ces requêtes 6 peuvent être émises durant la diffusion du programme de télévision interactif. Typiquement, l'objet d'une telle requête peut être une demande de modification d'un plan vidéo, d'un canal audio ou de l'affichage de d'informations. La requête 6 comporte notamment une description des flux demandés ou au moins un moyen d'identification de ce flux. L'usager peut par exemple émettre ces requêtes au moyen d'un décodeur TV classique. Le service de réalisation 5 valide les requêtes 6 émises par l'usager et modifie le contenu du programme à délivrer à l'usager. Il comporte des interfaces nécessaires pour lire la requête 6.
Pour répondre aux requêtes de modification de programme émises par les usagers, le service de réalisation doit pouvoir accéder à la description des flux de données associées au programme en cours de diffusion. A cet effet, le service de réalisation 5 s'adresse par exemple à un service 7 de gestion des profils utilisateurs. Ce service de gestion 7 fait partie de la plate-forme 2. Il accède aux profils des utilisateurs. Dans l'exemple de la figure 1, en réponse à une requête émise par l'usager du terminal 1, le service de réalisation s'adresse au service 7 de gestion des profils utilisateurs pour accéder aux données contenues dans le profil utilisateur 8 de l'usager. Un profil utilisateur est un ensemble d'attributs qui caractérisent le compte de l'usager et dont les données sont associées à cet usager. En l'occurrence, le profil utilisateur 8 comprend la description des flux de données associés au programme en fonction des préférences de l'usager. Plus généralement, le profil utilisateur comporte la description des flux de données non seulement pour le programme en cours de diffusion mais aussi pour d'autres programmes futurs. Par exemple, le profil utilisateur 8 peut contenir les descriptions des contenus désirés par l'usager pour la retransmission d'un match de football ou du Tour de France. Une description d'un contenu est constituée de l'ensemble des descriptions de flux de données qui définissent ce contenu. Concrètement, les flux décrits correspondent aux séquences et informations que l'usager désire voir apparaître sur son terminal de réception 1, ainsi que l'ensemble des différentes prises de vue et prises de sons auxquels il souhaite accéder. Pour chaque programme, le profil utilisateur comporte ainsi un module de préférence qui stocke la configuration de l'émission du programme voulue par l'usager titulaire du profil utilisateur. Le service de réalisation 5 via le service de gestion des profiles utilisateurs 7 vérifie notamment qu'une requête 6 formulée par un usager est conforme à son profil utilisateur. Puis sur la base des descriptions des flux sélectionnés transmises par la requête et des descriptions des contenus stockés dans le profil utilisateur, le service de réalisation 5 lance la sélection des flux de données.
Ces flux de données sont disponibles dans un service de contenu 9. Ce service 9 comporte tous les flux de données associés à un programme donné. Le contenu chargé dans le service 9 peut être chargé depuis le site 19 d'un fournisseur de contenus, plus généralement de programmes. Le service 9 comporte notamment tous les flux vidéo correspondant à toutes les prises de vues possibles, tous les flux audio correspondant à toutes les prises de son possibles et toutes les informations interactives qui peuvent être superposées. Ces dernières peuvent être très variées, allant du simple affichage d'information à une séquence filmée par exemple. Le service de réalisation 5 sélectionne les flux demandés par l'usager. L'ensemble de toutes les combinaisons possibles des flux de données peut être très important et difficile à sélectionner simplement par l'usager. La sélection des flux de données est par exemple facilitée par le module de préférences présent dans le profil utilisateur. Ce module de préférence indique par exemple une sélection de flux en fonction d'une ou plusieurs informations synthétiques émises par la requête 6. A cet effet, un menu est par exemple affiché sur l'écran du terminal 1, ce menu est diffusé avec les autres données du programme interactif et peut être activé à la demande, pour permettre à l'usager de faire ses choix. Le menu correspond par exemple aux préférences de l'usager. Un ensemble de flux de données correspond à chaque rubrique du menu. Les flux de données ne sont ainsi pas sélectionnés directement mais par l'intermédiaire d'un module de préférence s'affichant par exemple sous forme de menu.
L'accès aux flux de données s'effectue par exemple au moyen d'un service de sélection 10. Ce service 10 reçoit les flux de données du contenu 9 par une voie multiplexée 11. Le service de sélection filtre les flux de données à destination du terminal. Le filtrage s'effectue en fonction des instructions données par le service de réalisation. Le service de sélection 10 transmet alors au service de diffusion 3 un flux multiplexé 12 qui comporte ces flux sélectionnés ainsi que des informations du profil utilisateur de l'usager. Ces informations permettent au service de diffusion d'identifier l'usager. Les flux 4 sont alors diffusés vers le terminal de réception 1 de l'usager. Les données transmises entre tous ces services transitent par le bus 20.

Avantageusement, l'invention permet la taxation du contenu reçu par l'usager. La taxation effectue un calcul du coût des services, en particulier elle peut établir un coût pour chaque flux de données transmis en fonction de divers paramètres, notamment la nature du flux de données ou la durée de transmission par exemple. A partir de cette taxation établie, donc du coût de service, un élément de facturation peut être établi pour chaque flux de données afin de définir une facture globale à destination de l'usager.

A cet effet la plate-forme 1 comporte un service de taxation 13 qui communique notamment avec le service de réalisation 5. Ce service de taxation 13 permet de générer par exemple un élément de facturation pour chaque flux de données sélectionné. Plus particulièrement le service de taxation est activé dès qu'un flux de données est sélectionné. L'activation du service de taxation génère un calcul de coût, puis une rubrique de facturation à destination de l'usager. Le coût peut être défini en fonction de plusieurs paramètres comme indiqué par la suite.
La facture peut être établie facilement au nom de l'usager qui a demandé la sélection grâce au service de taxation. En effet cet usager est parfaitement identifié par son profil utilisateur 8. L'information sur le titulaire du profil utilisateur est facilement accessible au service de taxation car cette information est disponible depuis le service de sélection 10 ou le service de réalisation 5. A chaque demande d'un flux de données particulier par un usager, le service de sélection transmet par exemple une information 14 au service de taxation 13, lui indiquant la nature du flux sélectionné et le titulaire du profil utilisateur. Une grande souplesse de taxation est ainsi offerte. Il est ainsi possible d'établir des factures en fonction des flux de données et de l'usager, en particulier de ses préférences ou de son type d'abonnement. La facture peut aussi se faire en fonction de la durée de transmission d'un flux de donnée, cette durée étant accessible au service de taxation 13 notamment via le service de sélection des flux. Les calculs du service de taxation sont par exemple validés par le service de réalisation qui interagit à la fois avec le service de sélection, le contenu des programmes et le profil utilisateur. L'invention permet ainsi avantageusement de créer un moyen de paiement fiable et efficace des programmes interactifs fournis par la plate-forme 1. Elle rend ainsi rentable économiquement l'ensemble du service de télévision produit par la plate-forme.

La plate-forme 2 peut comporter d'autres services IMS 15. Ainsi avantageusement, cette plate-forme IMS, standardisée, peut offrir en parallèle d'autres services que celui de programme de télévision interactif précédemment décrit.

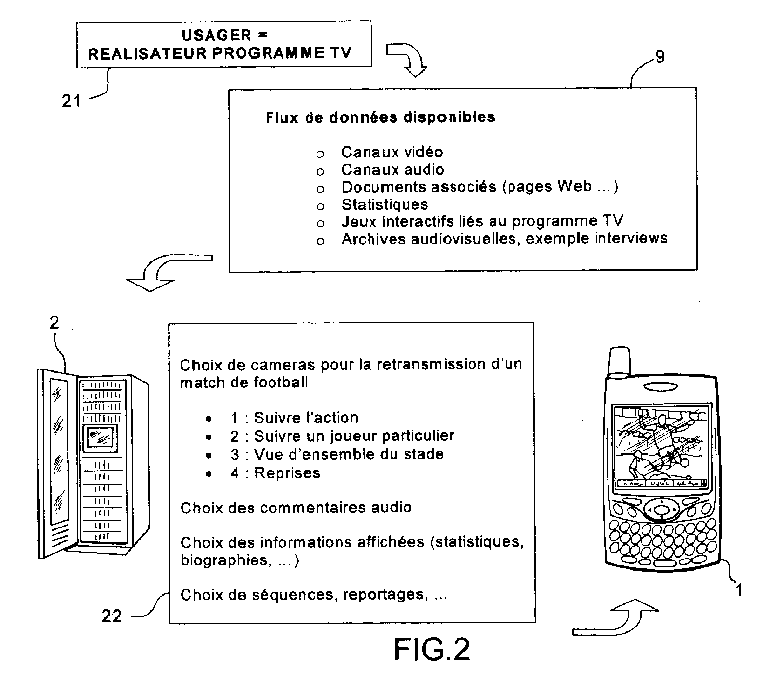

La figure 2 illustre un exemple de programme interactif fourni par un système selon l'invention. Le programme interactif diffusé en direct est la retransmission d'un match de football. L'usager 21 est le réalisateur de la retransmission du match de football. Le terminal de réception 1 utilisé par l'utilisateur est par exemple un terminal de téléphonie mobile muni d'un écran de télévision. Dans un environnement de téléphonie mobile combinée à l'Internet, en particulier grâce à l'utilisation d'une plate-forme IMS, les terminaux de réception peuvent être des terminaux de téléphonie mobiles, mais aussi par exemple des PDA ou encore des ordinateurs portables ou fixes. La plate-forme 2 est implantée dans un serveur relié au réseau de téléphonie mobile et au réseau Internet.
Les flux de données disponibles dans le contenu 9 de la plate-forme 2 sont par exemple :
- des canaux vidéo correspondant chacun à une prise de vue du match de football ;
- des canaux video correspondant aux différents commentaires possibles ;
- des documents associés, par exemple des pages Web ;
- des statistiques ou des biographies relatives aux équipes ou aux joueurs qui les composent ;
- des jeux interactifs liés au programme TV en cours, en l'occurrence au match en cours de retransmission ;
- des archives audiovisuelles relatives par exemples aux équipes ou aux joueurs qui les composent.

Les données délivrées par le service de contenu 9 sont fournies à ce dernier par le fournisseur de contenu 19. Dans le cas de la retransmission de ce match de football, les canaux vidéo sont transmis en direct. Chaque canal vidéo est transmis au contenu 9 par une caméra. Dans la phase interactive 22, l'usager peut ainsi sélectionner au cours de la transmission la caméra de son choix, c'est-à-dire la prise de vue de son choix, il peut ainsi choisir la caméra qui lui permet :
- de suivre l'action en cours ;
- de suivre un joueur particulier ;
- d'avoir une vue d'ensemble du stade ;
- des reprises d'action, notamment au ralenti.
L'usager peut encore choisir les commentaires, préférant tel ou tel expert par exemple. A ces données vidéo et audio, l'usager peut ajouter des informations sur les joueurs.
Tous ces différents flux de données sont transmis par le service de diffusion 3. Les demandes de modification de programme sont émises par l'usager par les requêtes 6, lesquelles sont gérées par le service de réalisation.

Le service de taxation permet avantageusement d'établir une facturation des différents flux de données transmis durant cette retransmission.

## Revendications

1. Système d'émission d'un programme interactif, **caractérisé en ce qu'**il comporte une plate-forme (2) délivrant des services multimédias IMS, ladite plate-forme comportant un service de diffusion (3) de flux de données (4) vers les terminaux de réception (1) des usagers en fonction de requêtes de sélection (6) émises par les usagers, les flux de données sélectionnées composant le programme.

2. Système selon la revendication 1, **caractérisé en ce que** ladite plate-forme comporte au moins :
- un service de diffusion (3) transmettant les flux de données (4) aux terminaux de réception (1) ;
- un service de réalisation (5) recevant les requêtes (6) et modifiant la sélection des flux de données à transmettre par le service de diffusion en fonction des descriptions de flux transmises par les requêtes ;
- un service de contenu (9) délivrant l'ensemble des flux de données disponibles pour le programme ;
- un service de sélection (10) filtrant les flux de données délivrées par le service de contenu (9) en fonction des instructions fournies par le service de réalisation (5).

3. Système selon a revendication 2, **caractérisé en ce que** la plate-forme (2) comporte les profils utilisateurs (8) des usagers, chaque profil utilisateur comportant un module de préférence comportant des descriptions de flux de données propres à l'usager, le service de réalisation (5) sélectionnant, pour chaque profil utilisateur, les flux à transmettre en fonction des requêtes et des descriptions contenues dans le module de préférence.

4. Système selon l'une quelconque des revendications précédentes, **caractérisé en ce que** la plate-forme (2) comporte un service de taxation (13), ce service de taxation étant activé pour chaque flux de données sélectionné, l'activation du service de taxation générant un élément de facturation.

5. Système selon la revendication 4 et l'une quelconque des revendications 2 ou 3, **caractérisé en ce que** le service de taxation (13) est activé pour chaque profil utilisateur (8) générant le flux sélectionné.

6. Système selon la revendication 5, **caractérisé en ce que** le service de taxation (13) est activé par le service de réalisation.

7. Système selon l'une quelconque des revendications précédentes, **caractérisé en ce que** les flux de données disponibles dans le service de contenu (9) sont :
- des canaux vidéo correspondant chacun à une prise de vue ;
- des canaux vidéo correspondant chacun à une prise de son ;
- des données interactives liées au programme.
